Europäisches Patentamt

**European Patent Office**

Office européen des brevets

(19)

(11) Veröffentlichungsnummer: **0 242 751**
**B1**

(12) **EUROPÄISCHE PATENTSCHRIFT**

(45) Veröffentlichungstag der Patentschrift:
**11.10.89**

(51) Int. Cl.⁴: **B27K 3/52**

(21) Anmeldenummer: **87105413.6**

(22) Anmeldetag: **11.04.87**

(54) **Holzschutzmittel auf Basis Borsäure.**

(30) Priorität: **19.04.86 DE 3613252**

(43) Veröffentlichungstag der Anmeldung:
**28.10.87 Patentblatt 87/44**

(45) Bekanntmachung des Hinweises auf die Patenterteilung:
**11.10.89 Patentblatt 89/41**

(84) Benannte Vertragsstaaten:
**AT BE CH DE FR GB LI LU NL**

(56) Entgegenhaltungen:
**EP-A- 0 045 866**
**WO-A-82/03817**
**DE-A- 2 401 554**
**DE-B- 2 140 051**

(73) Patentinhaber: **Dr. Wolman GmbH,**
**Dr.-Wolman-Strasse 31-33, D-7573 Sinzheim(DE)**

(72) Erfinder: **Goettsche, Reimer, Dr., Waldstrasse 27,**
**D-7570 Baden-Baden 19(DE)**
Erfinder: **Marx, Hans-Norbert, Mozartweg 8,**
**D-7580 Buehl-Weitenung(DE)**
Erfinder: **Borck, Hans-Volker, Im Kastanienwald 8,**
**D-7570 Baden-Baden 19(DE)**

(74) Vertreter: **Schweiss, Werner, Dr. et al, BASF**
**Aktiengesellschaft Patentabteilung**
**Carl-Bosch-Strasse 38, D-6700 Ludwigshafen(DE)**

## Beschreibung

Die vorliegende Erfindung betrifft Holzschutzmittel (Konzentrate oder verdünnte wäßrige Lösungen) auf der Basis von Borsäure, Polyalkylenamin und quartären Ammoniumsalzen.

Die Verwendung hochkonzentrierter wasserlöslicher Salze auf Basis wasserlöslicher Amine und Borsäure als Holzschutzmittel ist bekannt (DE-2140051). Die Wirksamkeit dieser Mittel bei Witterungsbeanspruchung des Holzes (Regen) reicht nicht aus, da die Borsäure als wirksame Komponente ausgewaschen wird.

Quartäre Ammoniumverbindungen werden im Holzschutz eingesetzt. Sie können in Form ihrer wäßrigen Lösungen in das Holz eingebracht werden, hierbei ziehen sie auf die Fasern auf und bleiben dadurch im oberen Bereich des Holzes verankert; sie können nicht durch Diffusion in tiefere Bereiche des Holzes eindringen.

Durch die Mischung von Alkanolaminen und Borsäure mit quartären Ammoniumverbindungen wird die Wirksamkeit der quartären Ammoniumverbindung gegen Basidiomyceten-Pilze, beispielsweise gegen Coniophora puteana und gegen Poria vaporaria, insbesondere gegen Coniophora puteana durch Auswaschung des damit imprägnierten Holzes mit Wasser verringert.

Es wurde jetzt gefunden, daß die obengenannten Nachteile nicht eintreten, wenn Mischungen von Polyalkylenamin, Borsäure und einem quartären Ammoniumsalz verwendet werden.

Als quartäre Ammoniumverbindungen können hierbei verwendet werden z.B. solche, die der allgemeinen Formel $(R^1 R^2 R^3 R^4 N)^+ Z^-$ entsprechen, wobei
$R^1$ einen Alkylrest mit 8 bis 20 Kohlenstoffatomen, insbesondere einen Alkylrest mit 12 bis 20 Kohlenstoffatomen, oder einen Benzylrest bedeutet, der gegebenenfalls durch $C_1-C_{20}$-Alkyl oder Halogen substituiert ist,
$R^2$ $C_1-C_6$-Alkyl, $C_1-C_4$-Alkoxy oder $C_3-C_9$-Alkoxyalkyl,
$R^3$ $C_1-C_6$-Alkyl oder $C_1-C_4$-Alkoxy und
$R^4$ $C_1-C_{20}$-Alkyl oder $C_1-C_4$-Alkoxy bedeuten,
oder je zwei der Reste $R^1$ bis $R^4$ zusammen mit dem Stickstoffatom einen heterocyclischen Rest bilden, der 4 bis 5 C-Atome, 1 bis 2 N-Atome und eine, zwei oder drei Doppelbindungen enthält, wobei die Kohlenstoffatome gegebenenfalls durch $C_1 - C_4$-Alkyl oder Halogen substituiert sind, und Z einen Säurerest z.B. Halogenid (Chlorid) bedeutet.

Als Polyalkylenamin können insbesondere $C_6$-$C_{12}$-Alkylenpolyamine eingesetzt werden, z.B. Dipropylentriamin, (3,3'-Diaminodipropylamin), Tripropylentetramin, Tetrapropylenpentamin, oder ihre Mischungen bzw. Mischungen mit entsprechenden Polyäthylenaminen. Bevorzugte Polyalkylenamine sind Dipropylentriamin und Tripropylentetramin.

Die erfindungsgemäßen Mittel besitzen in wäßrigen Lösungen einen pH-Wert von pH 6,0 bis 10,0, vorzugsweise 6,5 bis 8,5.

Die Mittel (Konzentrate) enthalten z.B.

(Gewichtsprozent)
5,0 - 50 % Borsäure
2,5 - 50 % quartäre Ammoniumverbindungen
1,5 - 30 % Polyalkylenamine,
wobei die Summe jeweils 100 (Gew. %) ergibt, sowie gegebenenfalls untergeordnete Mengen an anderen Bestandteilen, wie wassermischbare organische Lösungsmittel, Korrosionsinhibitoren und erforderlichenfalls Wasser, dessen Anteil jedoch i.a. gering gehalten werden kann und im wesentlichen der besseren Handhabung dient. Die Erfindung erstreckt sich jedoch gleichermaßen auch auf die durch Verdünnung mit Wasser herstellbaren Imprägnierlösungen entsprechend geringerer Einzelkonzentrationen.

Die Mittel (Konzentrate) können als Pasten oder hochkonzentrierte klare Lösungen vorliegen.

Die Erfindung wird an folgenden Beispielen erläutert. Die Prüfung erfolgte gemäß europäischer Norm EN 113.

Beispiel 1 (Vergleich)

25,00 % Alkyldimethylbenzylammoniumchlorid Alkyl: Mischung $C_{12}$-$C_{16}$ mit ca. 40 % $C_{12}$, ca. 50 % $C_{14}$, ca. 10 % $C_{16}$
33,00 % Borsäure
11,00 % Monoethanolamin
31,00 % Wasser

Grenzwerte gegen Coniophora puteana nach Auswaschungsbeanspruchung (Auswaschung des imprägnierten Holzes mit Wasser): mehr als 4 % (Tränkkonzentration), mehr als 28 kg/m³ (aufgenommene Menge pro m³ Holz).

Beispiel 2

11,00 % Alkyldimethylbenzylammoniumchlorid ($C_{12}$ ca. 40 %; $C_{14}$ ca. 50 %; $C_{16}$ ca. 10 %)
44,00 % Borsäure
9,00 % Dipropylentriamin
36,00 % $H_2O$

Grenzwert gegen Coniophora puteana nach Auswaschbeanspruchung:
1,50 - 2,00 % (Tränkkonzentration); 10,50 - 14,00 kg/m³

Beispiel 3

11,00 % Alkyldimethylbenzylammoniumchlorid ($C_{12}$ ca. 40 %; $C_{14}$ ca. 50 %; $C_{16}$ ca. 10 %)
42,00 % Borsäure
13,00 % Tripropylentetramin
34,00 % Wasser

Grenzwert gegen Coniophora puteana nach Auswaschbeanspruchung:
7,50 - 11,00 kg/m³

Beispiel 4

22,00 % Alkyldimethylbenzylammoniumchlorid ($C_{12}$ ca. 40 %; $C_{14}$ ca. 50 %; $C_{16}$ ca. 10 %)
30,00 % Borsäure
6,00 % Dipropylentriamin
42,00 % Wasser

Grenzwert gegen Coniophora puteana nach Auswaschbeanspruchung:
7,20 - 10,80 kg/m³

### Beispiel 5

11,00 % Alkyldimethylbenzylammoniumchlorid
(C$_{12}$ ca. 40 %; C$_{14}$ ca. 50 %; C$_{16}$ ca. 10 %)
42,00 % Borsäure
13,00 % Tetrapropylenpentamin
34,00 % Wasser
Grenzwert gegen Coniophora puteana nach Auswaschbeanspruchung:
10,70 - 14,50 kg/m³

### Beispiel 6 (Vergleich)

100 % Alkyldimethylbenzylammoniumchlorid
(C$_{12}$ ca. 40 %; C$_{14}$ ca. 50 %; C$_{12}$ ca. 10 %)
Grenzwert gegen Coniophora puteana nach Auswaschbeanspruchung:
2,80 - 4,40 kg/m³

### Beispiel 7 (Vergleich)

65,00 % Borsäure
13,00 % Dipropylentriamin
22,00 % Wasser
Grenzwert gegen Coniophora puteana nach Auswaschbeanspruchung:
mehr als 5 % (Tränkkonzentration); mehr als 32,50 kg/m³

## Patentansprüche

1. Holzschutzmittel auf der Basis eines organischen Amins und Borsäure, dadurch gekennzeichnet, daß es neben der Borsäure ein Polyalkylenamin und ein quartäres Ammoniumsalz enthält.

2. Holzschutzmittel nach Anspruch 1, dadurch gekennzeichnet, daß es Dipropylentriamin enthält.

3. Holzschutzmittel nach Anspruch 1, dadurch gekennzeichnet, daß es Tripropylentetramin enthält.

4. Verfahren zum Schutz von Holz, dadurch gekennzeichnet, daß man das Holz mit einer wäßrigen Lösung eines Holzschutzmittels gemäß Anspruch 1 behandelt.

## Claims

1. A wood preservative based on an organic amine and boric acid, which contains a polyalkyleneamine and a quarternary ammonium salt in addition to the boric acid.

2. A wood preservative as claimed in claim 1, which contains dipropylenetriamine.

3. A wood preservative as claimed in claim 1, which contains tripropylenetetramine.

4. A method for preserving wood, wherein the wood is treated with an aqueous solution of a wood preservative as claimed in claim 1.

## Revendications

1. Agent de protection du bois, à base d'une amine organique et d'acide borique, caractérisé par le fait qu'il contient, outre l'acide borique, une polyalkylénamine et un sel d'ammonium quatrenaire.

2. Agent de protection du bois, selon la revendication 1, caractérisé par le fait qu'il contient de la dipropylénetriamine.

3. Agent de protection du bois selon la revendication 1, caractérisé par le fait qu'il contient de la tripropylènetétramine.

4. Procédé pour la protection du bois, caractérisé par le fait que l'on traite le bois avec une solution aqueuse d'un agent de protection du bois selon la revendication 1.